# EUROPEAN PATENT SPECIFICATION

(11) **EP 2 596 079 B1**
(45) Date of publication and mention of the grant of the patent: **29.07.2020**
(21) Application number: 11730796.7
(22) Date of filing: 15.06.2011
(51) Int. Cl.: C09K 11/08, C09K 11/77, H05B 33/14

(54) **BLEND COMPRISING AN OXYNITRIDE PHOSPHOR AND LIGHT EMITTING APPARATUS USING IT**
MISCHUNG ENTHALTEND OXYNITRID-LEUCHTSTOFF UND LICHTEMITTIERENDES INSTRUMENT SIE ENTHALTEND
MELANGE COMPRENANT UNE SUBSTANCE LUMINESCENTE À BASE D'OXYNITRURE ET INSTRUMENT ÉMETTEUR DE LUMIÈRE L'UTILISANT

(30) Priority: 22.07.2010 US 841607
(43) Date of publication of application: 29.05.2013
(73) Proprietor: General Electric Company, Schenectady, NY 12345 (US)
(72) Inventor: HANCU, Dan, Niskayuna, NY 12309 (US); BHAT, Shyamala, Halady Subraya, Niskayuna, NY 12309 (US); NAMMALWAR, Prasanth, Kumar, Niskayuna, NY 12309 (US); MANEPALLI, Satya, Kishore, Niskayuna, NY 12309 (US); SETLUR, Anant, Achyut, Niskayuna, NY 12309 (US); POROB, Digamber, Gurudas, Niskayuna, NY 12309 (US)
(74) Representative: FRKelly
(86) International application number: PCT/US2011/040434
(87) International publication number: WO 2012/012041

(56) References cited:
- EP-A1- 1 571 194
- EP-A2- 1 669 429
- WO-A1-2006/061778
- WO-A1-2010/061597
- WO-A2-2009/117148
- US-A1- 2008 081 011
- US-A1- 2009 033 201
- US-B2- 7 297 293

## Description

### BACKGROUND

The invention generally relates to oxynitride phosphors, their preparation methods and light emitting equipments that include the oxynitride phosphors.

Over the past ten years, developments and breakthroughs in solid state lighting based on phosphor down conversion of indium gallium nitride (InGaN) light emitting diodes (LED) have shown the potential for replacing traditional fluorescent and incandescent lamps. These colored semiconductor light emitting devices, including light emitting diodes and lasers (both are generally referred to herein as LEDs), have been also produced from Group III-V alloys such as gallium nitride (GaN). To form the LEDs, layers of the alloys are typically deposited epitaxially on a substrate, such as silicon carbide or sapphire, and may be doped with a variety of n and p type dopants to improve properties, such as light emission efficiency. With reference to the InGaN-based LEDs, light is generally emitted in the UV and/or blue range of the electromagnetic spectrum. Until quite recently, LEDs have not been suitable for lighting uses where a bright white light is needed, due to the inherent color of the light produced by the LED.

Recently, techniques have been developed for converting the light emitted from LEDs to useful light for illumination purposes. In one technique, the LED is coated or covered with a phosphor layer. A phosphor is a luminescent material that absorbs radiation energy in a portion of the electromagnetic spectrum and emits energy in another portion of the electromagnetic spectrum. Phosphors of one important class are crystalline inorganic compounds of very high chemical purity and of controlled composition to which small quantities of other elements (called "activators") have been added to convert them into efficient fluorescent materials. With the right combination of activators and host inorganic compounds, the color of the emission can be controlled. Most useful and well-known phosphors emit radiation in the visible portion of the electromagnetic spectrum in response to excitation by electromagnetic radiation outside the visible range.

By interposing a phosphor excited by the radiation generated by the LED, light of a different wavelength, e.g., in the visible range of the spectrum, may be generated. Colored LEDs are often used in toys, indicator lights and other devices. Manufacturers are continuously looking for new colored phosphors for use in such LEDs to produce custom colors and higher luminosity.

In addition to colored LEDs, a combination of LED generated light and phosphor generated light may be used to produce white light. The most popular white LEDs are based on blue emitting InGaN chips. The blue emitting chips are coated with a phosphor that converts some of the blue radiation to a complementary color, e.g. a yellow-green emission. The total of the light from the phosphor and the LED chip provides a color point with corresponding color coordinates (x and y) and correlated color temperature (CCT), and its spectral distribution provides a color rendering capability, measured by the color rendering index (CRI).

One known white light emitting device comprises a blue light-emitting LED having a peak emission wavelength in the blue range (from about 440 nm to about 480 nm) combined with a phosphor, such as cerium doped yttrium aluminum garnet Y₃Al₅O₁₂: Ce³⁺ ("YAG:Ce"). The phosphor absorbs a portion of the radiation emitted from the LED and converts the absorbed radiation to a yellow-green light. The remainder of the blue light emitted by the LED is transmitted through the phosphor and is mixed with the yellow light emitted by the phosphor. A viewer perceives the mixture of blue and yellow light as a white light.

Such systems can be used to make white light sources having correlated color temperatures (CCTs) of >4500 K and color rendering indicies (CRIs) of about 70-80. While this range is suitable for many applications, general illumination sources usually require higher CRIs and lower CCTs. Given the high quantum efficiency of YAG:Ce at room and elevated temperatures and the strong blue absorption from the allowed 4f¹→5d¹ Ce³⁺ transition, such a system fulfills many of the requirements for LED lighting. However, a shortcoming is that they typically cannot fulfill the color requirements for general illumination, low CCTs (<3500K) and higher CRIs. In order to fulfill these requirements, new phosphor compositions are needed. Oxynitride phosphor compositions are known in the prior art, for example from EP 1 571 194 A1, EP 1 669 429 A2 and US 2009/033201 A1.

### BRIEF DESCRIPTION

According to a first aspect of the invention, a blend of phosphors for use in LED light sources is presented, as defined in claim 1.

According to a second aspect of the invention, a lighting apparatus capable of emitting white light is presented, as defined in claim 4. The lighting apparatus includes a semiconductor light source and the blend of phosphors according to the first aspect of the invention radiationally coupled to the light source.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic cross-sectional view of a lighting apparatus according to one embodiment of the present invention.
FIG. 2 is a comparison of X-Ray diffraction graphs of two phosphor compositions.
FIG. 3 is an X-Ray diffraction graph of a phosphor composition
FIG. 4 is an emission spectrum of a phosphor composition.
FIG. 5 is a graphical representation of normalized emission data with respect to temperature.
FIG. 6 is a comparison of X-Ray diffraction graphs of two phosphor compositions.
FIG. 7 is a comparison of X-Ray diffraction graphs of two phosphor compositions.
FIG. 8 is a comparison of X-Ray diffraction graphs of two phosphor compositions.
FIG. 9 is a comparison of emission spectra graphs of four phosphor compositions.

### DETAILED DESCRIPTION

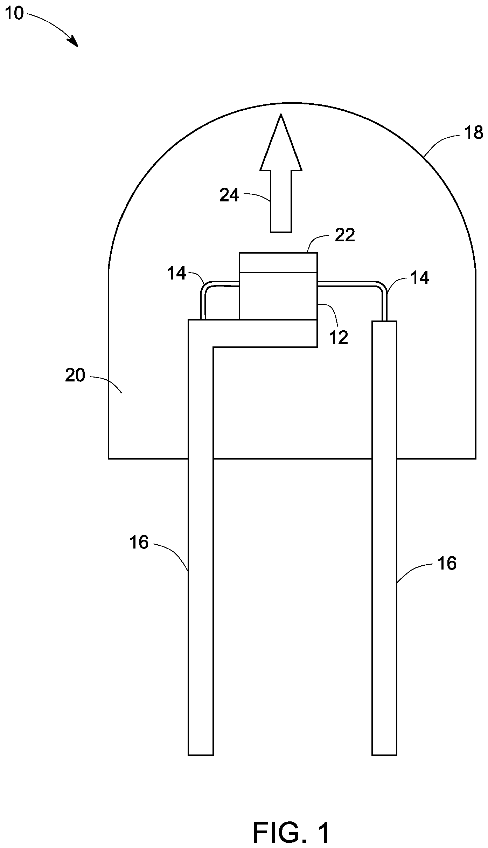

With reference to FIG 1, a lighting apparatus or light emitting assembly or lamp 10 is shown in accordance with one embodiment of the present invention. Lighting apparatus 10 comprises a semiconductor UV radiation source, such as a light emitting diode (LED) chip 12 and leads 14 electrically attached to the LED chip. The leads 14 may comprise thin wires supported by a thicker lead frame(s) 16 or the leads may comprise self-supported electrodes and the lead frame may be omitted. The leads 14 provide current to the LED chip 12 and thus cause the LED chip 12 to emit radiation.

The lamp may include any semiconductor blue or UV light source that is capable of producing white light when its emitted radiation is directed onto the phosphor. In one embodiment, the semiconductor light source comprises a blue emitting LED doped with various impurities. Thus, the LED may comprise a semiconductor diode based on any suitable III-V, II-VI or IV-IV semiconductor layers and having an emission wavelength of about 250 to 550 nm. In particular, the LED may contain at least one semiconductor layer comprising GaN, ZnSe or SiC. For example, the LED may comprise a nitride compound semiconductor represented by the formula IniGajAlkN (where 0≤i; 0≤j; 0≤k and i +j +k =1) having an emission wavelength greater than about 250 nm and less than about 550 nm. Preferably, the chip is a near-uv or blue emitting LED having a peak emission wavelength from about 400 to about 500 nm. Such LED semiconductors are known in the art. The radiation source is described herein as an LED for convenience. However, as used herein, the term is meant to encompass all semiconductor radiation sources including, e.g., semiconductor laser diodes.

Although the general discussion of the exemplary structures of the invention discussed herein are directed toward inorganic LED based light sources, it should be understood that the LED chip may be replaced by another radiation source unless otherwise noted and that any reference to LED chip or semiconductor is merely representative of any appropriate radiation source.

The LED chip 12 may be encapsulated within a shell 18, which encloses the LED chip and an encapsulant material 20. The shell 18 may be, for example, glass or plastic. Preferably, the LED 12 is substantially centered in the encapsulant 20. The encapsulant 20 is preferably an epoxy, plastic, low temperature glass, polymer, thermoplastic, thermoset material, resin, silicone or other type of LED encapsulating material as is known in the art. Optionally, the encapsulant 20 is a spin-on glass or some other high index of refraction material. Preferably, the encapsulant material 20 is an epoxy or a polymer material, such as silicone. Both the shell 18 and the encapsulant 20 are preferably transparent or substantially optically transmissive with respect to the wavelength of light produced by the LED chip 12 and a phosphor composition 22 (described below). Alternately, the lamp 10 may only comprise an encapsulant material without an outer shell 18. The LED chip 12 may be supported, for example, by the lead frame 16, by the self supporting electrodes, the bottom of the shell 18, or by a pedestal (not shown) mounted to the shell or to the lead frame. In some embodiments, the LED chip 12 is mounted in a reflective cup (not shown). The cup may be made from or coated with a reflective material, such as alumina, titania, or other dielectric powder known in the art. An example of a reflective material is Al₂O₃.

Lighting apparatus 10 includes phosphor composition 22, described below, radiationally coupled to the LED chip 12. Radiationally coupled means that the elements are associated with each other so radiation from one is transmitted to the other. Phosphor composition 22 is deposited on the LED 12 by any appropriate method. For example, a water-based suspension of the phosphor(s) can be formed, and applied as a phosphor layer to the LED surface. In one such method, a silicone slurry in which the phosphor particles are randomly suspended is placed around the LED. This method is merely exemplary of possible positions of the phosphor composition 22 and LED 12. Thus, the phosphor composition 22 may be coated over or directly on the light emitting surface of the LED chip 12 by coating and drying the phosphor suspension over the LED chip 12. Both the shell 18 and the encapsulant 20 should be transparent to allow white light 24 to be transmitted through those elements. Although not intended to be limiting, in one embodiment, the median particle size of the phosphor composition as measured by light scattering may be from about 1 to about 15 microns.

In other embodiments, the phosphor composition 22 is interspersed within the encapsulant material 20, instead of being formed directly on the LED chip 12. The phosphor (in the form of a powder) may be interspersed within a single region of the encapsulant material 20 or, more preferably, throughout the entire volume of the encapsulant material. Blue light emitted by the LED chip 12 mixes with the light emitted by the phosphor composition 22, and the mixed light appears as white light. If the phosphor is to be interspersed within the material of encapsulant 20, then a phosphor powder may be added to a polymer precursor, loaded around the LED chip 12, and then the polymer precursor may be cured to solidify the polymer material. Other known phosphor interspersion methods may also be used, such as transfer loading.

In yet another embodiment, phosphor composition 22 is coated onto a surface of the shell 18, instead of being formed over the LED chip 12. The phosphor composition is preferably coated on the inside surface of the shell 18, although the phosphor may be coated on the outside surface of the shell, if desired. The phosphor composition 22 may be coated on the entire surface of the shell or only a top portion of the surface of the shell. The UV light emitted by the LED chip 12 mixes with the light emitted by the phosphor composition 22, and the mixed light appears as white light. Of course, the phosphor may be located in any two or all three locations or in any other suitable location, such as separately from the shell or integrated into the LED.

Phosphor composition 22 includes an oxynitride phosphor material blended with additional phosphors according to claim 1.

As used herein, the term 'greater than zero' denotes that the intended component is intentionally added, rather than an incidental amount that may be present as an impurity. As used herein, end points of the ranges include incidental variations above and below the stated number, as appropriate for normal measurement and process variations.

A is a combination of barium with calcium or a combination of barium with strontium and calcium. The amount of calcium or a combination of strontium and calcium put together in the A site along with barium is in the range of about 0.001 to about 0.5 mole fraction of barium.

In one embodiment, B is silicon. In another embodiment, B is a combination of silicon with aluminum. In one embodiment R is europium. In another embodiment, R is a combination of europium and cerium. In one embodiment, R is present in the oxynitride material at a level of about 0.001 to about 0.5 mole fraction of the oxynitride material.

When used with an LED emitting at from 350 to 550 nm and one or more other appropriate phosphors, the resulting lighting system will produce a light having a white color, the characteristics of which will be discussed in more detail below. Lamp 10 may also include scattering particles (not shown), which are embedded in the encapsulant material. The scattering particles may comprise, for example, Al₂O₃ particles such as alumina powder or TiO₂ particles. The scattering particles effectively scatter the coherent light emitted from the LED chip, preferably with a negligible amount of absorption.

The phosphors with the oxynitride materials described above may contain optically inert trace impurities. The presence of such impurities in an amount up to 10% by weight of the phosphor composition will not significantly affect the quantum efficiency or color of the phosphor.

It may be desirable to add pigments or filters to the phosphor material. The phosphor layer 22 may also comprises from 0 up to about 5 % by weight (based on the total weight of the phosphors) of a pigment or other UV absorbent material capable of absorbing UV radiation having a wavelength between 250 nm and 450 nm.

Suitable pigments or filters include any of those known in the art that are capable of absorbing radiation generated between 250 nm and 450 nm. Such pigments include, for example, nickel titanate or praseodymium zirconate. The pigment is used in an amount effective to filter 10% to 100% of the radiation generated in the 250 nm to 450 nm range.

Phosphors of oxynitride materials described above may be produced using known solid-state reaction methods by combining, for example, elemental oxides, carbonates, nitrides, and/or hydroxides as starting materials. Other starting materials may include nitrates, sulfates, acetates, citrates, or oxalates. Alternately, coprecipitates of the rare earth oxides could be used as the starting materials for the rare earth elements. In a typical process, the starting materials are combined via a dry blending process and fired in air or under a slightly reducing atmosphere at from, e.g., 1000 to 1600°C.

The oxynitride phosphor material is obtained by mixing w amount of Ba₃N₂ , x amount of BaCO₃, y amount of Si₃N₄, z amount of Eu₂O₃, u amount of BaCl₂, and v amount of LiOH, where w varies in a range such that 0.2 < w < 1, x varies in a range such that 0.2 < x < 1.5, y varies in a range such that 2.5 <y < 3.3, z varies in a range such that 0.001< z <0.2, u varies in a range such that 0. 1< u <1, and v varies in a range such that 0. 1< v <1. The resultant material from this combination, after following the mixing, drying, calcining and firing steps of the preparation yields to an oxynitride phosphor material having an excitation spectrum in the range of about 200 nm to about 500 nm and the emission spectrum in the range of about 500 nm to about 750 nm.

In another typical process, the starting materials are combined via a dry or wet blending process and fired in air or under a reducing atmosphere at from, e.g., 800 to 1600°C. A flux may be added to the mixture before or during the step of mixing. This flux may be any conventional fluxes, such as a chloride or a fluoride of an alkali/alkaline earth metal. In one embodiment, the flux includes barium chloride, barium fluoride, lithium chloride, lithium fluoride, lithium hydroxide, lithium nitride, lithium tetra borate, aluminum chloride, aluminum fluoride, ammonium chloride, boric acid, magnesium chloride, magnesium fluoride, or any combination of these materials. A quantity of a fluxing agent of less than about 20 percent by weight of the total weight of the mixture is adequate for fluxing purposes. In one embodiment, the fluxing agent less than about 10 percent by weight of the total weight of the mixture is used as flux.

The starting materials may be mixed together by any mechanical method including, but not limited to, stirring or blending in a high-speed blender or a ribbon blender. The starting materials may be combined and pulverized together in a ball mill, a hammer mill, or a jet mill. The mixing may be carried out by wet milling in alcohol or organic solvents especially when the mixture of the starting materials is to be made into a solution for subsequent precipitation. If the mixture is wet, in one embodiment, the mixture is dried first before being fired under a reducing atmosphere at a temperature from about 900°C to about 1700°C, preferably from about 1000°C to about 1600°C, for a time sufficient to convert all of the mixture to the final composition.

The firing may be conducted in a batch wise or continuous process, some times with a stirring or mixing action to promote good gas-solid contact. The firing time depends on the quantity of the mixture to be fired, the rate of gas conducted through the firing equipment, and the quality of the gas-solid contact in the firing equipment. Typically, a firing time up to about 10 hours is adequate. The reducing atmosphere typically comprises a reducing gas such as hydrogen, carbon monoxide, or a combination thereof, optionally diluted with an inert gas, such as nitrogen or helium, or a combination thereof. Alternatively, the crucible containing the mixture may be packed in a second closed crucible containing high-purity carbon particles and fired in air so that the carbon particles react with the oxygen present in air, thereby, generating carbon monoxide for providing a reducing atmosphere.

An oxynitride phosphor of the formula AₚB_{q}OᵣNₛ:R with any of the previously defined A, B, R, p, q, r, and s values were prepared by dry mixing the raw materials along with any fluxes that aid in the phase formation of the intended oxynitride phosphor in a ball mill in the presence of suitable grinding media. The mixing and grinding was some times carried out in a controlled atmosphere so that the contents are not exposed <5 ppm oxygen and <0.1 ppm water. The mixed and ground contents were transferred to a container maintaining suitable minimum exposure to oxygen and water. One suitable container that is often used is a Molybdenum (Mo) crucible. The container, along with the constituents were placed inside a furnace and subjected to calcining to a required temperature for phase formation. Typically the temperature of the calcination is in the range of about 1250°C to about 1500°C. The atmosphere surrounding the Mo crucible and the contents are often adjusted to be a slight reducing atmosphere. In one example, an atmosphere of about 3% hydrogen in nitrogen is used for the calcination. After calcination, the products were cooled and washed to remove any extra materials. Typically, a dilute nitric acid solution was used to wash out many of the impurities. One particular phosphor that is prepared using this method is (Ba, Ca, Sr, Mg)₄Si₉OᵣN_{14.66}-_{(2/3)r}:Eu, wherein 1< r ≤4.

The oxynitride phosphors is blended with additional phosphors for use in LED light sources. Thus, in another embodiment, an LED lighting apparatus is provided including a phosphor composition 22 comprising a blend of any of the oxynitride phosphor described above with additional phosphors.

The relative amounts of each phosphor in a phosphor blend can be described in terms of spectral weight. Spectral weight is the relative amount that each phosphor contributes to the overall emission spectrum of the device. The spectral weight amounts of all the individual phosphors and any residual bleed from the LED source should add up to 1.0 (i.e. 100%). In one embodiment, the above-described oxynitride phosphor has a spectral weight ranging from about 0.001 to 0.75. Any known blue, blue-green, green, yellow, orange or red phosphor suitable for use in UV or blue LED systems may be used in blends with this phosphor to customize the white color of the resulting light and produce higher CRI sources.. While not intended to be limiting, suitable phosphors that can be used in the blend with the present oxynitride phosphors include phosphors such as
BLUE/BLUE-GREEN
(Ba,Sr,Ca)₅(PO₄)₃(Cl,F,Br,OH):Eu²⁺,Mn²⁺(SECA)
(Ba,Sr,Ca)BPO₅:Eu²⁺,Mn²⁺
(Sr,Ca)₁₀(PO₄)₆ • vB₂O₃:Eu²⁺ (wherein 0<v≤1)
Sr₂Si₃O₈ • 2SrCl₂:Eu²⁺
(Ca,Sr,Ba)₃MgSi₂O₈:Eu²⁺,Mn²⁺
BaAl₈O₁₃:Eu²⁺
2SrO • 0.84P₂O₅ • 0.16B₂O₃:Eu²⁺
(Sr,Ca,Ba)₄Al₁₄O₂₅:Eu²⁺ (SAE)
(Ba,Sr,Ca)MgAl₁₀O₁₇:Eu²⁺,Mn²⁺
GREEN/YELLOW-GREEN
(Ba,Sr,Ca)Al₂O₄:Eu²⁺
(Y,Gd,Lu,Sc,La)BO₃:Ce³⁺,Tb³⁺
(Ba,Sr,Ca)₂Si_{1-ξ}O_{4-2ξ}:Eu²⁺ (wherein 0≤ξ≤0.2) (SASI)
(Ba,Sr,Ca)₂(Mg,Zn)Si₂O₇:Eu²⁺
(Sr,Ca,Ba)(Al,Ga,In)₂S₄:Eu²⁺
(Sr,Ca,Ba)₃Al₁₋ₓSiₓO₄₊ₓF₁₋ₓ:Ce³⁺ (SASOF)
(Y,Gd,Tb,La,Sm,Pr,Lu)₃(Sc,Al,Ga)_{5-α}O_{12-3/2α}:Ce³⁺ (wherein 0≤α,≤0.5) (YAG)
(Lu,Sc,Y,Tb)₂₋ᵤ₋ᵥCeᵥCa₁₊ᵤLi_{w}Mg_{2-w}P_{w}(Si,Ge)_{3-w}O_{12-u/2} where -0.5≤u≤1; 0<v≤0.1; and
0≤w≤0.2 (LuSi)
(Ca,Ba,Sr)Si₂O₂N₂:Eu²⁺,Ce³⁺
(Ca,Sr)₈(Mg,Zn)(SiO₄)₄Cl₂:Eu²⁺,Mn²⁺
Na₂Gd₂B₂O₇:Ce³⁺,Tb³⁺
(Sr,Ca,Ba,Mg,Zn)₂P₂O₇:Eu²⁺,Mn²⁺
ORANGE/RED
(Gd,Y,Lu,La)₂O₃:Eu³⁺,Bi³⁺
(Gd,Y,Lu,La)₂O₂S:Eu³⁺,Bi³⁺
(Gd,Y,Lu,La)VO₄:Eu³⁺,Bi³⁺
(Ca,Sr)S:Eu²⁺,Ce³⁺
SrY₂S₄:Eu²⁺
CaLa₂S₄:Ce³⁺
(Ba,Sr,Ca)MgP₂O₇:Eu²⁺,Mn²⁺
(Y,Lu)₂WO₆:Eu³⁺Mo⁶⁺
(Ba,Sr,Ca)_{β}Si_{γ}Nµ:Eu²⁺,Ce³⁺ (wherein 2β+4γ=3µ)
Ca₃(SiO₄)Cl₂:Eu²⁺
(Y,Lu,Gd)_{2-ϕ}Ca_{ϕ}Si₄N_{6+ϕ}C_{1-ϕ}:Ce³⁺, (wherein 0≤ϕ≤0.5)
(Lu,Ca,Li,Mg,Y)alpha-SiAlON:Eu²⁺,Ce³⁺
3.5MgO • 0.5MgF₂ • GeO₂:Mn⁴⁺ (MFG)
Ca_{1-c-f}Ce_{c}Eu_{f}Al_{1+c}Si_{1-c}N₃, (where 0<c≤0.2, 0≤f≤0.2)
Ca₁₋ₕ₋ᵣCeₕEuᵣAl₁₋ₕ(Mg,Zn)ₕSiN₃, (where 0<h≤0.2, 0≤r≤0.2)
Ca₁₋₂ₛ₋ₜCeₛ(Li,Na)ₛEuₜAlSiN₃, (where 0≤s≤0.2, 0≤f≤0.2, s+t>0)
Ca_{1-σ-χ-φ}Ce_{σ}(Li,Na)_{χ}Eu_{φ}Al_{1+σ-χ}Si_{1-σ+χ}N₃, (where 0≤σ≤0.2, 0<χ≤0.4, 0≤φ≤0.2) Complex fluorides doped with Mn⁴⁺, such as (Na,K,Rb,Cs,NH₄)₂(Ti,Ge,Sn,Si,Zr,Hf)F₆:Mn⁴⁺.

The ratio of each of the individual phosphors in the phosphor blend may vary depending on the characteristics of the desired light output. The relative proportions of the individual phosphors in the various embodiment phosphor blends may be adjusted such that when their emissions are blended and employed in an LED lighting device, there is produced visible light of predetermined x and y values on the CIE chromaticity diagram. As stated, a white light is preferably produced. This white light may, for instance, possess an x value in the range of about 0.30 to about 0.55, and a y value in the range of about 0.30 to about 0.55. As stated, however, the exact identity and amounts of each phosphor in the phosphor composition can be varied according to the needs of the end user. When combined with a LED emitting at from 350-550 nm and additional phosphors, the use of the oxynitride phosphor material described above allows for a white LED device having a higher CRI value and lower CCT as compared to a YAG based lighting device. LED devices having CCT values from about 2500 to about 10000, preferably from 2500 to 4500, and high CRI values from about 70 to 99 can be made.

For example, when using 405 nm LEDs these oxynitride phosphors described above can be combined with a combination of phosphors that can include blue, blue-green, and red phosphors to make white light with CCT values ranging from 2500-10000 K and CRIs ranging from 70-99. One referential example of such a blend would be the oxynitride phosphor described above in combination with the SECA blue phosphor, the SAE blue-green phosphor, and the MFG red phosphor. Alternatively, the phosphor composition described above can also be used in combination with 430-450 nm LEDs and appropriate phosphor blends using a combination of phosphors that can include green, yellow-green and red phosphors. In the invention, the blend is the oxynitride phosphor described above in combination with a green/yellow-green phosphor such as SASOF, YAG, or LuSi and a complex fluoride doped with Mn⁴⁺, such as (Na,K,Rb,Cs,NH₄)₂(Ti,Ge,Sn,Si,Zr,Hf)F₆:Mn⁴⁺.

The phosphor composition described above may be used in additional applications besides LEDs. For example, the material may be used as a phosphor in a fluorescent lamp, in a cathode ray tube, in a plasma display device or in a liquid crystal display (LCD). The material may also be used as a scintillator in an electromagnetic calorimeter, in a gamma ray camera, in a computed tomography scanner or in a laser. These uses are meant to be merely exemplary and not exhaustive.

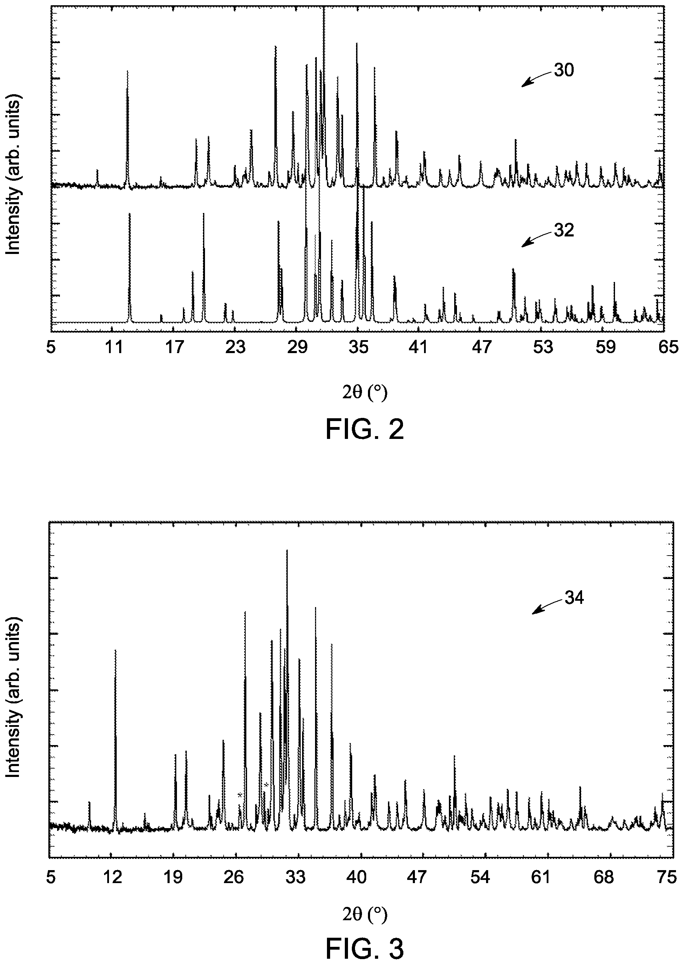

The oxynitride phosphor material described herein is having a monoclinic crystal structure. An oxynitride phosphor material is provided, which is believed to have a novel crystal structure as determined by X-ray diffraction. This phosphor composition (also denoted as YON) can accommodate a wide range of oxygen and nitrogen. Experiments that have led to the invention described here have shown that phases hitherto unknown are present. An example of an X-ray diffraction analyses carried out on this novel powder within the BaO-Si₃N₄ system yielded a characteristic X-ray powder diagram 30 shown in FIG. 2. Here the X-Ray diffraction diagram 30 of the new phosphor is compared with X-ray powder diagram 32 of a known composition in the Ba₃N₂₋-Si₃N₄ system corresponding to Ba₂Si₅N₈. The X-ray powder diagram was taken using Cu-Kα radiation of wavelength 1.5418 Å. Table 1 gives a list of reflections with d values for lattice spacings (in Angstroms) and the intensity (normalized to the maximum intensity which is set at 100). An X-ray powder diagram, as is known, characteristic of and reproducible for the crystalline phase of the substance concerned.

**Table 1.**

| No | d(Å) | Intensity | No | d(Å) | Intensity | No | d(Å) | Intensity |
|---|---|---|---|---|---|---|---|---|
| 1 | 9.240 | 99 | 16 | 2.705 | 620 | 30 | 1.824 | 121 |
| 2 | 7.071 | 650 | 17 | 2.671 | 402 | 31 | 1.806 | 270 |
| 3 | 5.615 | 57 | 18 | 2.565 | 800 | 32 | 1.766 | 128 |
| 4 | 5.506 | 21 | 19 | 2.444 | 652 | 33 | 1.743 | 76 |
| 5 | 4.608 | 268 | 20 | 2.316 | 295 | 34 | 1.705 | 57 |
| 6 | 4.345 | 282 | 21 | 2.189 | 128 | 35 | 1.682 | 119 |
| 7 | 4.204 | 32 | 22 | 2.171 | 194 | 36 | 1.657 | 97 |
| 8 | 3.859 | 121 | 23 | 2.095 | 98 | 37 | 1.646 | 90 |
| 9 | 3.614 | 320 | 24 | 2.054 | 99 | 38 | 1.628 | 147 |
| 10 | 3.299 | 785 | 25 | 2.014 | 177 | 39 | 1.603 | 132 |
| 11 | 3.106 | 418 | 26 | 1.928 | 143 | 40 | 1.568 | 115 |
| 12 | 2.972 | 676 | 27 | 1.876 | 80 | 41 | 1.535 | 139 |
| 13 | 2.885 | 708 | 28 | 1.868 | 104 | 42 | 1.516 | 106 |
| 14 | 2.843 | 657 | 29 | 1.862 | 93 | 43 | 1.442 | 153 |
| 15 | 2.817 | 1000 | | | | | | |

There is an understanding that due to differences in the treatment of specific samples, small variations can occur, in particular for the intensity ratios. In addition, there can be shifts in the d values within this type of material due to the presence of additional ions and/or changes in the stoichiometry, which modify the crystal lattice parameters. It is possible to substitute other cations or anions and/or alter the stoichiometry in this material while retaining the same crystal structure. The X-ray powder diagram will be substantially the same as the materials within the BaO-Si₃N₄ system with shifts in the d values (e.g. to within +/-5%) depending upon the size of the cations/anions and the extent of substitution and/or non-stoichiometry. There may also be changes in the intensity ratios, which can also be dependent upon the exact treatment of specific samples, as is known. One such example is the texturing of powder samples, known in the prior art that can enhance specific diffraction peaks relative to others. Impurity peaks (e.g. from unreacted raw materials) in experimental data sets are marked with asterisks, as also customary in the art. The latter peaks are easily identified e.g. by comparison against the known patterns of the raw materials in the existing XRD databases such as the Powder Diffraction File (PDF) of the International Centre for Diffraction Data (ICDD).

### EXAMPLES

In some of the examples, excess amount of one or more constituent is taken in order to get better phase purity or as a fluxing agent. Further, the CO₂ and moisture evolved during the reaction has tendency to oxidize and remove some nitrogen from the starting materials, hence there may be some variation in actual nitrogen and oxygen content of final product with respect to starting composition. In the following, examples 1-14 are presented. Out of those, examples 3 and 12 describe oxynitride phosphors according to the blend of claim 1. Example 1-2, 4-11, and 13-14 represent reference examples of oxynitride phosphor materials.

### Example 1.

About 3.156g of Si₃N₄, about 0.158g of Eu₂O₃, about 1.805g of BaCO₃ and about 2.926g of Ba₃N₂ were dry mixed along with about 1.01g of BaCl₂ and 0.107g of LiOH for about 5 to 15 min along with zirconia media in a nalgene bottle inside a glove box that was maintained at about 0.1ppm of oxygen and about 0.1ppm of H₂O. After mixing, the mixture was transferred to a Mo crucible and sealed in a zip lock bag inside the glove box. The sample was then transferred outside the glove box, taken to a furnace and fired in the Mo crucible at about 1350°C in a 1% hydrogen in nitrogen atmosphere for about 5 hours. The sample was then ground using a mortar and pestle and sieved using 350 mesh and again fired at about 1350°C for 5 hours under 1% hydrogen in nitrogen atmosphere. The sample was then ground again and repeatedly washed with water and dilute nitric acid until the pH of the solution turns to neutral. The dilute nitric acid was prepared using about 2 volume percentage of nitric acid in water.

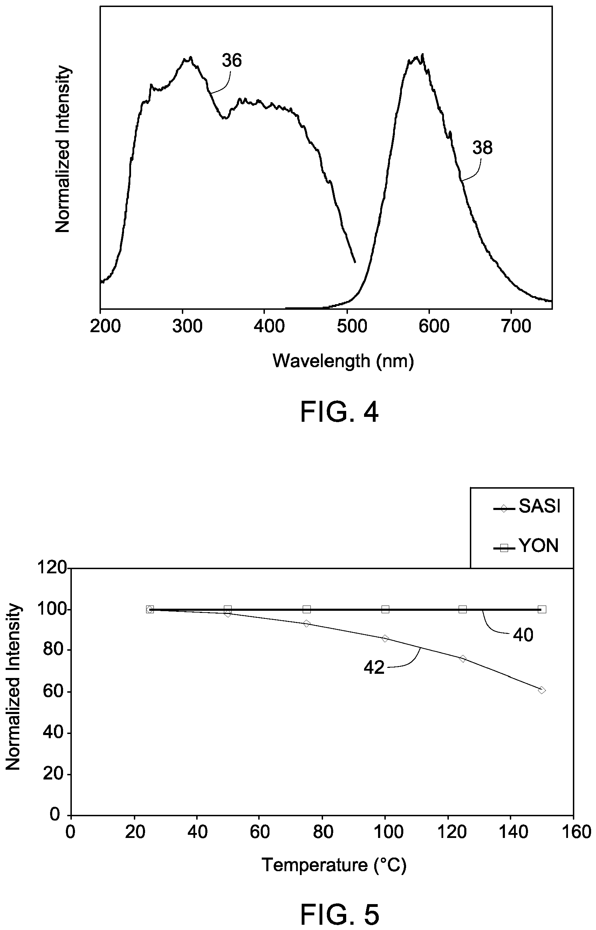

The X-ray diffraction pattern 34 taken using Cu-Kα radiation of 1.5418Å of the resultant phosphor indicated an unique phosphor of formula Ba_{3.88}Eu_{0.12}Si₉O_{1.4}N_{13.76}, as shown in FIG. 3. The small amount of BaSi₇N₁₀ phase present in this X-Ray diffraction pattern is denoted as impurity. The excitation 36 and emission 38 spectra of this phosphor was measured and given in FIG 4. The quantum efficiency (QE) and absorbance (Abs) were determined using phosphor powders pressed into plaques. The QE measured was a relative measurement versus a standard LED phosphor Sr_{1.64}Ca_{0.3}Eu_{0.06}Si_{0.96}O_{3.92} (SASI) set at 100%. The absorbance was calculated from reflectance measurements calibrated with pressed powder plaque of BaSO₄ as customary in the art. The relative QE/Abs of the sample under 405nm excitation was 90%/80%. The luminescent intensity as a function of temperature for this phosphor 40 versus the standard SASI yellow oxide phosphor (Sr,Ca)₂SiO₄:Eu²⁺ (SASI) 42 is shown in FIG. 5. It can be seen that the present phosphor exhibits much less thermal quenching than the yellow oxide phosphor.

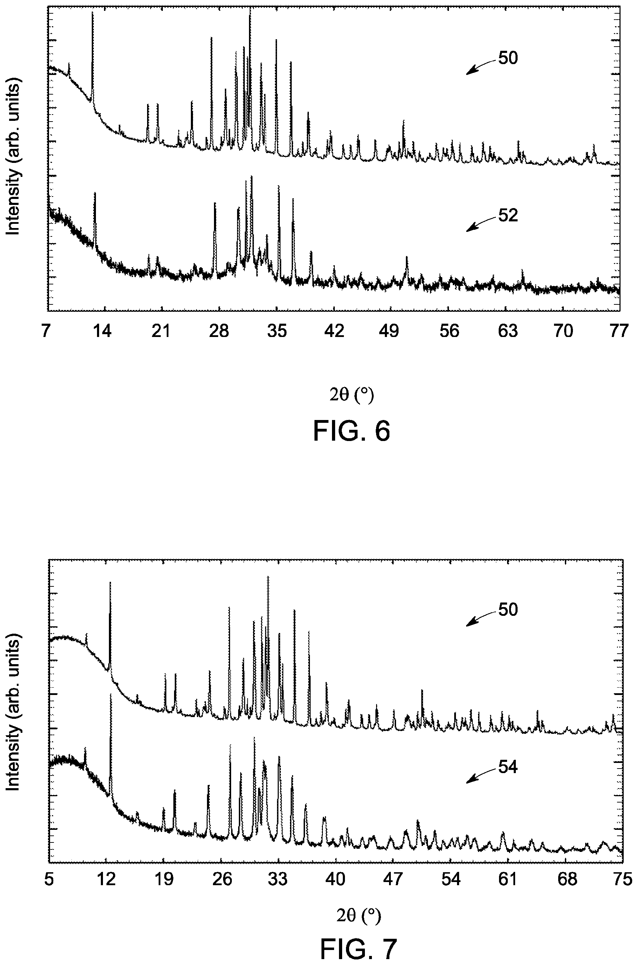

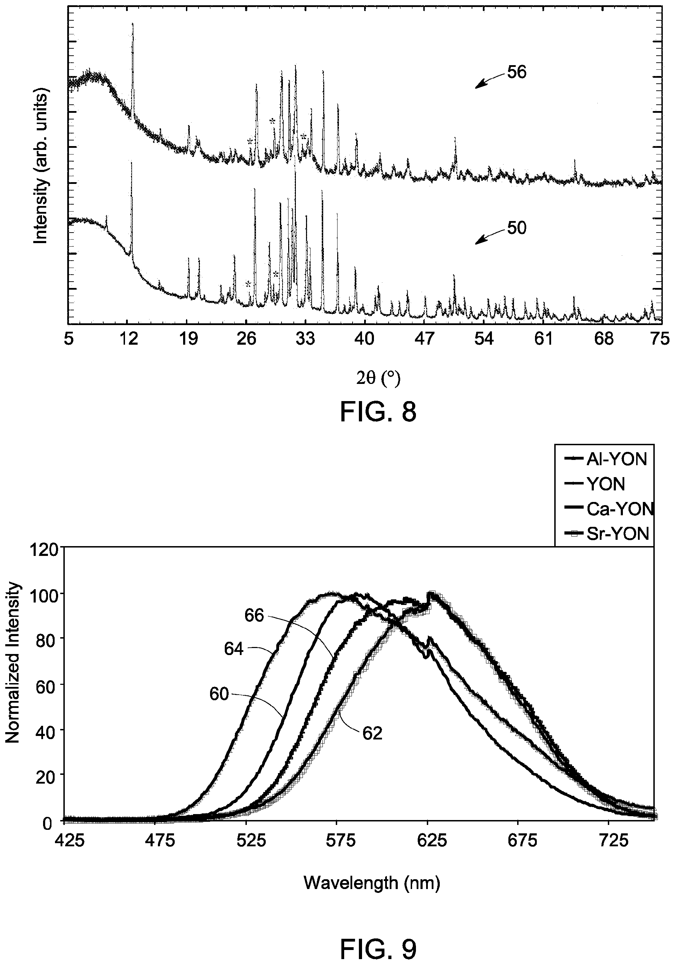

FIG. 6 compares the X-Ray diffraction pattern 50 of the unique phosphor YON of BaO-Si₃N₄ system with the X-Ray pattern 52 of the strontium substituted YON phosphor. Similarly FIG. 7 and 8 compare X-Ray diffraction pattern 50 of YON with the X-Ray diffraction patterns 54 of Aluminum substituted YON and 56 of calcium substituted YON, respectively. FIG. 9 compares the emission spectra 60 of YON with the emission spectra 62 of strontium substituted YON, 64 of aluminum substituted YON, and 66 of calcium substituted YON. Emission spectra 60 of YON has an emission maximum at 585 nm, while the emission maximum of strontium 62, aluminum 64, and calcium 66 substituted YON are at 625, 575, and 620, respectively. Hence, it can be seen from FIG. 9 that the emission maximum of the YON spectra can be shifted to lower or higher wavelengths by cation substitutions.

### Example 2.

About 3.156g of Si₃N₄, about 0.158g of Eu₂O₃, about 1.657g of BaCO₃, about 0.03g of MgO and about 2.926g of Ba₃N₂ were dry mixed along with about 1.01g of BaCl₂ and about 0.107g of LiOH for about 5 to 15 min along with zirconia media in a nalgene bottle inside a glove box that was maintained at about 0.1ppm of oxygen and about 0.1ppm of H₂O. After mixing, the mixture was transferred to a Mo crucible and sealed in a zip lock bag inside the glove box. The sample was then transferred outside the glove box, taken to a furnace and fired in the Mo crucible at about 1350°C in a 1% hydrogen in nitrogen atmosphere for about 5 hours. The sample was then ground using a mortar and pestle and sieved using 350mesh and again fired at about 1350°C for 5 hours under 1% hydrogen in nitrogen atmosphere. The sample was then ground again and repeatedly washed with water and dilute nitric acid until the pH of the solution turns to neutral. The relative QE/Abs of the sample under 405nm excitation was 100%/80%. The X-ray diffraction pattern taken using Cu-Kα radiation indicated a unique phosphor of formula Ba_{3.78}Mg_{0.1}Eu_{0.12}Si₉OᵣNₛ where r and s can vary such that 1.2 ≤ r ≤ 4 and 12 ≤ s ≤13.866.

### Example 3.

About 3.156g of Si₃N₄, about 0.158g Eu₂O₃, about 0.621g BaCO₃, about 0.6g CaCO₃ and about 2.926g Ba₃N₂ were dry mixed along with about 1.01g of BaCl₂ and about 0.107g of LiOH for about 5 to 15 min along with zirconia media in a nalgene bottle inside a glove box that was maintained at about 0.1ppm of oxygen and about 0.1ppm of H₂O. After mixing, the mixture was transferred to a Mo crucible and sealed in a zip lock bag inside the glove box. The sample was then transferred outside the glove box, taken to a furnace and fired in the Mo crucible at about 1350°C in 1% hydrogen in nitrogen atmosphere for about 5 hours. The sample was then ground using a mortar and pestle and sieved using 350mesh and again fired at about 1350°C for 5 hours under 1% hydrogen in nitrogen atmosphere. The sample was then ground again and repeatedly washed with water and dilute nitric acid until the pH of the solution turns to neutral. The relative QE/Abs of the sample under 405nm excitation was 80%/80%. The X-ray diffraction pattern taken using Cu-Kα radiation indicated a unique phosphor of formula Ba_{3.08}Ca_{0.8}Eu_{0.12}Si₉O_{1.4}N_{13.76}.

### Example 4.

About 3.156g of Si₃N₄, about 0.158g of Eu₂O₃, about 0.917g of BaCO₃, about 0.664g of SrCO₃ and about 2.926g of Ba₃N₂ were dry mixed along with about 1.01g of BaCl₂ and about 0.107g of LiOH for about 5 to 15 min along with zirconia media in a nalgene bottle inside a glove box that was maintained at about 0.1ppm of oxygen and about 0.1ppm of H₂O. After mixing, the mixture was transferred to a Mo crucible and sealed in a zip lock bag inside the glove box. The sample was then transferred outside the glove box, taken to a furnace and fired in the Mo crucible at about 1350°C in 1% hydrogen in nitrogen atmosphere for about 5 hours. The sample was then ground using a mortar and pestle and sieved using 350mesh and again fired at about 1350°C for 5 hours under 1% hydrogen in nitrogen atmosphere. The sample was then ground again and repeatedly washed with water and dilute nitric acid until the pH of the solution turns to neutral. The X-ray diffraction pattern taken using Cu-Kα radiation indicated a unique phosphor of formula Ba_{3.28}Sr_{0.6}Eu_{0.12}Si₉O_{1.4}N_{13.76}. Different levels of strontium substitution for barium was tried by changing the SrCO₃ and Ba₃N₂ raw material weights to get the oxynitrides of the formula Ba_{4-b}Sr_{b}Eu_{0.12}Si₉OᵣNₛ wherein 0≤ b ≤ 0.6, 1.2 ≤ r ≤ 4 and 12 ≤ s ≤13.866. The relative QE/Abs of some of the samples under 405nm excitation was as given below in the table 2. The oxygen and nitrogen levels of the compositions in the table 2 can vary such that 1.2 ≤ r ≤ 4 and 12 ≤ s ≤13.866.

**Table 2.**

| Compound | λₘₐₓ (nm) | QE | Absorbance |
|---|---|---|---|
| Ba_{3.88}Eu_{0.12}Si₉OᵣNₛ | 585 | 94 | 72 |
| Ba_{3.68}Sr_{0.2}Eu_{0.12}Si₉OᵣNₛ | 587 | 93 | 75 |
| Ba_{3.48}Sr_{0.4}Eu_{0.12}Si₉OᵣNₛ | 600 | 77 | 72 |
| Ba_{2.88}Sr_{1.0}Eu_{0.12}Si₉OᵣNₛ | 610 | 73 | 75 |

### Example 5.

10g batches of various phosphor formulations were produced as explained below. Sc₂O₃, Y₂O₃, La₂O₃, Gd₂O₃, Yb₂O₃, Lu₂O₃, Eu₂O₃, MgO, and Si₃N₄ were used as the raw materials for elements Sc, Y, La, Gd, Yb, Lu, Eu, Mg, and Si, respectively. BaCO₃ and Ba₃N₂ we added as the sources for Ba. These raw materials were dry mixed along with about 1.01g of BaCl₂ and about 0.107g of LiOH for about 5 to 15 min along with zirconia media in a nalgene bottle inside a glove box that was maintained at about 0.1ppm of oxygen and about 0.1ppm of H₂O. After mixing, the mixture was transferred to a Mo crucible and sealed in a zip lock bag inside the glove box. The sample was then transferred outside the glove box, taken to a furnace and fired in the Mo crucible at about 1350°C in 1% hydrogen in nitrogen atmosphere for about 5 hours. The sample was then ground using a mortar and pestle and sieved using 350mesh and again fired at about 1350°C for 5 hours under 1% hydrogen in nitrogen atmosphere. The sample was then ground again and repeatedly washed with water and dilute nitric acid until the pH of the solution turns to neutral. The QE/Abs values versus composition are as given in the table 3 below. The oxygen and nitrogen levels of the compositions in the table 3 can vary such that 1.2 ≤ r ≤ 4 and 12 ≤ s ≤13.866.

**Table 3.**

| Compound | QE | Absorbance |
|---|---|---|
| Ba_{3.68}Mg_{0.1}Sc_{0.1}Eu_{0.12}Si₉OᵣNₛ | 82 | 81 |
| Ba_{3.68}Mg_{0.1}Y_{0.1}Eu_{0.12}SigOᵣNₛ | 110 | 72 |
| Ba_{3.68}Mg_{0.1}La_{0.1}Eu_{0.12}Si₉OᵣNₛ | 91 | 72 |
| Ba_{3.68}Mg_{0.1}Gd_{0.1}Eu_{0.12}Si₉OᵣNₛ | 84 | 79 |
| Ba_{3.68}Mg_{0.1}Yb_{0.1}Eu_{0.12}Si₉OᵣNₛ | 114 | 65 |
| Ba_{3.68}Mg_{0.1}Lu_{0.1}Eu_{0.12}Si₉OᵣNₛ | 105 | 68 |

### Example 6.

10g batches of various aluminum, boron, gallium and germanium doped phosphor formulations were produced as explained below. Al₂O₃, B₂O₃, Ga₂O₃, GeO₂, AlN, BN, BaCO₃, MgO, Eu₂O₃, Ba₃N₂ and Si₃N₄ were used as raw materials. These raw materials were dry mixed along with about 1.01g of BaCl₂ and about 0.107g of LiOH for about 5 to 15 min along with zirconia media in a nalgene bottle inside a glove box that was maintained at about 0.1ppm of oxygen and about 0.1ppm of H₂O. After mixing, the mixture was transferred to a Mo crucible and sealed in a zip lock bag inside the glove box. The sample was then transferred outside the glove box, taken to a furnace and fired in the Mo crucible at about 1350°C in 1% hydrogen in nitrogen atmosphere for about 5 hours. The sample was then ground using a mortar and pestle and sieved using 350mesh and again fired at about 1350°C for 5 hours under 1% hydrogen in nitrogen atmosphere. The sample was then ground again and repeatedly washed with water and dilute nitric acid until the pH of the solution turns to neutral. The QE/Abs values versus composition are as given in the table 4 below. The X-ray diffraction pattern taken using Cu-Kα radiation for the Al doped phosphor is given in Fig 5. The oxygen and nitrogen levels of the compositions in the table 5 can vary such that 1.2 ≤ r ≤ 4 and 12 ≤ s ≤13.866.

**Table 4.**

| Compound | QE | Absorbance |
|---|---|---|
| Ba_{3.78}Mg_{0.1}Eu_{0.12}Si_{8.9}Al_{0.1}OᵣNₛ | 122 | 64 |
| Ba_{3.78}Mg_{0.1}Eu_{0.12}Si_{8.9}Al_{0.1}OᵣNₛ | 109 | 75 |
| Ba_{3.78}Mg_{0.1}Eu_{0.12}Si_{8.9}B_{0.1}OᵣNₛ | 94 | 72 |
| Ba_{3.78}Mg_{0.1}Eu_{0.12}Si_{8.9}B_{0.1}OᵣNₛ | 91 | 75 |
| Ba_{3.78}Mg_{0.1}Eu_{0.12}Si_{8.9}Ga_{0.1}OᵣNₛ | 103 | 73 |
| Ba_{3.78}Mg_{0.1}Eu_{0.12}Si_{8.9}Ge_{0.1}OᵣNₛ | 112 | 62 |

### Example 7.

About 2.629g of Si₃N₄, about 0.198g of Eu₂O₃ and about 7.174g of BaCO₃ were dry milled for about 5 hours along with zirconia media in a nalgene bottle. After mixing, the mixture was separated from zirconia media and transferred to a Mo crucible. This sample was transferred to a furnace and fired at about 1300°C in 4% hydrogen in nitrogen atmosphere for about 5 hours. The sample was then ground using a mortar and pestle and washed with dilute nitric acid followed by water until the pH of the solution turns to neutral. The composition of the sample prepared as determined by X-Ray diffraction was Ba_{3.88}Eu_{0.12}Si₉OᵣNₛ where 1.2 ≤ r ≤ 4 and 12 ≤ s ≤ 13.866. The relative QE/Abs of the sample under 405nm excitation was 72%/74%.

### Example 8.

About 2.386g of Si₃N₄, about 0.179g of Eu₂O₃ and about 7.583g of BaC₂O₄.0.5H₂O were dry milled for about 5 hours along with zirconia media in a nalgene bottle. After mixing, the mixture was separated from zirconia media and transferred to a Mo crucible. This sample was transferred to a furnace and fired at about 1350°C in 4% hydrogen in nitrogen atmosphere for about 5 hours. The sample was then ground using a mortar and pestle and washed with dilute nitric acid followed by water until the pH of the solution turns to neutral. The composition of the sample prepared as determined by X-Ray diffraction was Ba_{3.88}Eu_{0.12}Si₉OᵣNₛ where 1.2 ≤ r ≤ 4 and 12 ≤ s ≤13.866. The cell parameters for this material are a = 5.7685Å, b = 7.0611Å, c = 9.6493Å, beta = 107.42°. The relative QE/Abs of the sample under 405nm excitation was 92%/67%.

### Example 9.

About 1.519g of Si₃N₄, about 0.114g of Eu₂O₃ and about 5.366g of Ba-acetate were dry milled for about 5 hours along with zirconia media in a nalgene bottle. After mixing, the mixture was separated from zirconia media and transferred to a Mo crucible. This sample was transferred to a furnace and fired at about 1300°C in 4% hydrogen in nitrogen atmosphere for about 5 hours. The sample was then ground using a mortar and pestle and washed with dilute nitric acid followed by water until the pH of the solution turns to neutral. The composition of the sample prepared as determined by X-Ray diffraction was Ba_{3.88}Eu_{0.12}Si₉OᵣNₛ, where 1.2 ≤ r ≤ 4 and 12 ≤ s ≤13.866. The relative QE/Abs of the sample under 405nm excitation was 75%/64%.

### Example 10.

About 1.367g of Si₃N₄, about 0.344g AlN, about 0.059g of Eu₂O₃ and about 3.231g of BaCO₃ were dry milled for about 5 hours along with zirconia media in a nalgene bottle. After mixing, the mixture was separated from zirconia media and transferred to a Mo crucible. This sample was transferred to a furnace and fired at about 1400°C in 2% hydrogen in nitrogen atmosphere for about 5 hours. The sample was then ground using a mortar and pestle and washed with dilute nitric acid followed by water until the pH of the solution turns to neutral. The composition of the sample prepared as determined by X-Ray diffraction was Ba_{3.88}Eu_{0.12}Si₇Al₂OᵣNₛ where 3.2 ≤ r ≤ 6 and 10 ≤ s ≤ 11.866. The cell parameters for this material are a = 5.8339Å, b = 7.0393Å, c = 9.7450Å, beta = 107.07°. The relative QE/Abs of the sample under 405nm excitation was 52%/62%.

### Example 11.

About 1.471g of Si₃N₄, about 0.143g of AlN, about 0.074g of Eu₂O₃ about 1.256g of BaCO₃ and about 1.109g of Ba₃N₂ were dry mixed for about 5 to 15 min along with zirconia media in a nalgene bottle inside a glove box that was maintained at about 0.1ppm of oxygen and about 0.1ppm of H₂O. After mixing, the mixture was transferred to a Mo crucible and sealed in a zip lock bag inside the glove box. This sample was transferred to a furnace and fired at about 1350°C in 2% hydrogen in nitrogen atmosphere for about 5 hours. The sample was then ground using a mortar and pestle and washed with dilute nitric acid followed by water until the pH of the solution turns to neutral. The composition of the sample prepared as determined by X-Ray diffraction was Ba_{3.88}Eu_{0.12}Si₇Al₂OᵣNₛ where 3.2 ≤ r ≤ 6 and 10 ≤ s ≤ 11.866. The relative QE/Abs of the sample under 405nm excitation was 79%/65%.

### Example 12.

About 1.445g of Si₃N₄, about 0.073g of Eu₂O₃, about 0.827g of BaCO₃, about 1.064g of Ba₃N₂, about 0.104g of Ca₃N₂, about 0.465g of BaCl and about 0.051g of LiCl were dry mixed for about 5 to 15 min along with zirconia media in a nalgene bottle inside a glove box that was maintained at about 0.1ppm of oxygen and about 0.1ppm of H₂O. After mixing, the mixture was transferred to a Mo crucible and sealed in a zip lock bag inside the glove box. This sample was transferred to a furnace and fired at about 1350°C in 1% hydrogen in nitrogen atmosphere for about 5 hours. The sample was then ground using a mortar and pestle and again fired at about 1350°C for 5 hours in 1% hydrogen (balance nitrogen) atmosphere. The sample was then ground using a mortar and pestle and washed with dilute nitric acid followed by water until the pH of the solution turns to neutral. The composition of the sample prepared as determined by X-Ray diffraction was Ba_{3.28}Ca_{0.6}Eu_{0.12}Si₉OᵣNₛ where 1.2 ≤ r ≤ 4 and 12 ≤ s ≤ 13.866. The relative QE/Abs of the sample under 405nm excitation was 82%/78%. Different compositions of the formula Ba_{4-b}Ca_{b}Eu_{0.12}Si₉OᵣNₛ wherein 0≤ b ≤ 0.6, 1.2 ≤ r ≤ 4 and 12 ≤ s ≤13.866 were prepared and studied.

### Example 13.

About 3.156g of Si₃N₄, about 0.013g of Eu₂O₃, about 1.901g of BaCO₃, about 0.03g of MgO and about 2.938g of Ba₃N₂ were dry mixed along with about 1.01g of BaCl₂ and about 0.107g of LiOH for about 5 to 15 min along with zirconia media in a nalgene bottle inside a glove box that was maintained at about 0.1ppm of oxygen and about 0.1ppm of H₂O. After mixing, the mixture was transferred to a Mo crucible and sealed in a zip lock bag inside the glove box. The sample was then transferred outside the glove box, taken to a furnace and fired in the Mo crucible at about 1350°C in a 2% hydrogen in nitrogen atmosphere for about 5 hours. The sample was then ground using a mortar and pestle and sieved using 350mesh and again fired at about 1350°C for 5 hours under 1% hydrogen in nitrogen atmosphere. The sample was then ground again and repeatedly washed with water and dilute nitric acid until the pH of the solution turns to neutral. The relative QE/Abs of the sample under 405nm excitation was 95%/45%. The X-ray diffraction pattern taken using Cu-Kα radiation indicated a unique phosphor of formula Ba_{3.89}Mg_{0.1}Eu_{0.01}Si₉OᵣNₛ where r and s can vary such that 1.2 ≤ r ≤ 4 and 12 ≤ s ≤13.866.

### Example 14.

About 3.156g of Si₃N₄, about 0.527g of Eu₂O₃, about 1.036g of BaCO₃, about 0.03g of MgO and about 3.158g of Ba₃N₂ were dry mixed along with about 1.01g of BaCl₂ and about 0.107g of LiOH for about 5 to 15 min along with zirconia media in a nalgene bottle inside a glove box that was maintained at about 0.1ppm of oxygen and about 0.1ppm of H₂O. After mixing, the mixture was transferred to a Mo crucible and sealed in a zip lock bag inside the glove box. The sample was then transferred outside the glove box, taken to a furnace and fired in the Mo crucible at about 1350°C in a 2% hydrogen in nitrogen atmosphere for about 5 hours. The sample was then ground using a mortar and pestle and sieved using 350mesh and again fired at about 1350°C for 5 hours under 1% hydrogen in nitrogen atmosphere. The sample was then ground again and repeatedly washed with water and dilute nitric acid until the pH of the solution turns to neutral. The relative QE/Abs of the sample under 405nm excitation was 80%/82%. The X-ray diffraction pattern taken using Cu-Kα radiation indicated a unique phosphor of formula Ba_{3.5}Mg_{0.1}Eu_{0.4}Si₉OᵣNₛ where r and s can vary such that 1.2 ≤ r ≤ 4 and 12 ≤ s ≤13.866.

## Claims

1. A blend for use in LED light sources, comprising an oxynitride phosphor of formula AₚB_{q}OᵣNₛ: R and additional phosphors, wherein the additional phosphors comprise a green/yellow-green phosphor and a complex fluoride doped with Mn⁴⁺, preferably wherein the complex fluoride doped with Mn⁴⁺ comprises (Na,K,Rb,Cs,NH₄)₂(Ti,Ge, Sn, Si,Zr,Hf)F_{6:}Mn⁴⁺;
wherein
A is a combination of barium with Ca or a combination of barium with Sr and Ca;
B is silicon or a combination of silicon with at least one of Al, B, Ga, and Ge;
R is europium or a combination of europium with at least one of Ce, Pr, Sm, Nd, Tb, Dy, Yb, Tm, Er, Ho, and Mn;
p is greater than 2 and less than 6;
q is greater than 8 and less than 10;
r is greater than 0.1 and less than 6; and
s is greater than 10 and less than 15
wherein Ca, or a combination of Sr and Ca is present at a level ranging from 0.001 to 0.5 mole fraction based on total moles of Ba.

2. The blend of claim 1, wherein R is present at a level ranging from 0.001 to 0.5 mole fraction of the oxynitride material.

3. The blend of claim 1, wherein R is Eu.

4. A lighting apparatus capable of emitting white light, said lighting apparatus comprising:
a semiconductor light source; and
the blend of phosphors according to claim 1 , radiationally coupled to the light source.

## Patentansprüche

1. Mischung zur Verwendung in LED-Lichtquellen, umfassend einen Oxynitrid-Leuchtstoff nach Formel AₚB_{q}OᵣNₛ: R und zusätzliche Leuchtstoffe, wobei die zusätzlichen Leuchtstoffe einen grünen/gelbgrünen Leuchtstoff und ein komplexes, mit Mn⁴⁺ dotiertes Fluorid umfassen, wobei das komplexe, mit Mn⁴⁺ dotierte Fluorid vorzugsweise (Na,K,Rb,Cs,NH₄)₂(Ti,Ge,Sn,Si,Zr,Hf)F₆:Mn⁴⁺ umfasst;
wobei
A eine Kombination aus Barium mit Ca oder eine Kombination aus Barium mit Sr und Ca ist;
B Silizium oder eine Kombination aus Silizium mit mindestens einem von A1, B, Ga und Ge ist;
R Europium oder eine Kombination aus Europium mit mindestens einem von Ce, Pr, Sm, Nd, Tb, Dy, Yb, Tm, Er, Ho und Mn ist;
p größer als 2 und kleiner als 6 ist;
q größer als 8 und kleiner als 10 ist;
r größer als 0,1 und kleiner als 6 ist; und
s größer als 10 und kleiner als 15 ist;
wobei Ca oder eine Kombination aus Sr und Ca mit einem Gehalt vorliegt, das von 0,001 bis 0,5 Molfraktion auf Grundlage der Gesamtmolzahl von Ba reicht.

2. Mischung nach Anspruch 1, wobei R mit einem Gehalt vorliegt, das von 0,001 bis 0,5 Molfraktion des Oxynitrid-Materials reicht.

3. Mischung nach Anspruch 1, wobei R Eu ist.

4. Beleuchtungsinstrument, das in der Lage ist, weißes Licht zu emittieren, wobei das Beleuchtungsinstrument Folgendes umfasst:
eine Halbleiterlichtquelle; und
die Mischung von Leuchtstoffen nach Anspruch 1, die strahlenförmig mit der Lichtquelle gekoppelt sind.

## Revendications

1. Mélange pour une utilisation dans des sources lumineuses de type DEL, comprenant une substance luminescente à base d'oxynitrure de formule AₚB_{q}OᵣNₛ : R et des substances luminescentes supplémentaires, dans lequel les substances luminescentes supplémentaires comprennent une substance luminescente verte/jaune-verte et un fluorure complexe dopé avec Mn⁴⁺, de préférence dans lequel le fluorure complexe dopé avec Mn⁴⁺ comprend (Na,K,Rb,Cs,NH₄)₂(Ti,Ge,Sn,Si,Zr,Hf)F₆:Mn⁴⁺ ;
dans lequel
A est une combinaison de baryum avec du Ca ou une combinaison de baryum avec du Sr et du Ca ;
B est un silicium ou une combinaison de silicium avec au moins l'un de Al, B, Ga et Ge ;
R est un europium ou une combinaison d'europium avec au moins l'un de Ce, Pr, Sm, Nd, Tb, Dy, Yb, Tm, Er, Ho et Mn ;
p est supérieur à 2 et inférieur à 6 ;
q est supérieur à 8 et inférieur à 10 ;
r est supérieur à 0,1 et inférieur à 6 ; et
s est supérieur à 10 et inférieur à 15
dans lequel Ca, ou une combinaison de Sr et de Ca est présent à un niveau allant de 0,001 à 0,5 fraction molaire sur la base des moles totales de Ba.

2. Mélange selon la revendication 1, dans lequel R est présent à un niveau allant de 0,001 à 0,5 fraction molaire de la substance à base d'oxynitrure.

3. Mélange selon la revendication 1, dans lequel R est Eu.

4. Appareil d'éclairage capable d'émettre une lumière blanche, ledit appareil d'éclairage comprenant :
une source de lumière à semi-conducteur ; et
le mélange de substances luminescentes selon la revendication 1, couplé par rayonnement à la source de lumière.
